(19) Europäisches Patentamt
European Patent Office
Office européen des brevets

(11) Veröffentlichungsnummer : **0 125 685**
**B1**

(12) **EUROPÄISCHE PATENTSCHRIFT**

(45) Veröffentlichungstag der Patentschrift : **29.07.87**

(51) Int. Cl.[4] : **C 07 F 9/173**, C 07 F 9/24, A 01 N 57/14, A 01 N 57/30

(21) Anmeldenummer : **84105469.5**

(22) Anmeldetag : **14.05.84**

(54) **Insektizide Phosphorsäureester.**

(30) Priorität : **17.05.83 DE 3317874**

(43) Veröffentlichungstag der Anmeldung : **21.11.84 Patentblatt 84/47**

(45) Bekanntmachung des Hinweises auf die Patenterteilung : **29.07.87 Patentblatt 87/31**

(84) Benannte Vertragsstaaten : **AT BE CH DE FR GB IT LI NL**

(56) Entgegenhaltungen :
**EP-A- 0 008 098**
**US-A- 3 536 812**

(73) Patentinhaber : **BASF Aktiengesellschaft**
**Carl-Bosch-Strasse 38**
**D-6700 Ludwigshafen (DE)**

(72) Erfinder : **Baumann, Annegrit, Dr.**
**Im Sennteich 26**
**D-6800 Mannheim 24 (DE)**
Erfinder : **Kiehs, Karl, Dr.**
**Sudetenstrasse 22**
**D-6840 Lampertheim (DE)**
Erfinder : **Adolphi, Heinrich, Dr.**
**Kalmitweg 11**
**D-6703 Limburgerhof (DE)**
Erfinder : **Lange, Arno, Dr.**
**Oberes Geistal 3b**
**D-6702 Bad Duerkheim (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 125 685 B1

Jouve, 18, rue St-Denis, 75001 Paris, France

**Beschreibung**

Gegenstand der Erfindung sind neue Phosphorsäureester mit insbesondere insektizider und akarizider Wirkung und ein Verfahren zu ihrer Herstellung.

Aus der EP-A-0 008 098 sind Phosphorsäureester der Struktur

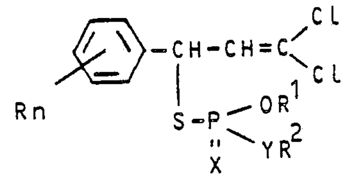

($R' = CH_3$ oder $C_2H_5$, $R^2 = C_{1-5}$ alkyl, X = O oder S, Y = O, S oder $—N(CH_3)—$, R = Halogen, $C_{1-4}$ Alkyl oder $C_{1-4}$ Alkoxy und n = 0, 1 oder 2) bekannt, die nicht sehr zugänglich sind.

Die erfindungsgemäßen Stoffe sind Phosphorsäureester der Formel I

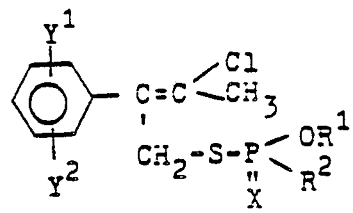

(I)

wobei $R^1$, $R^2$, $Y^1$ und $Y^2$ folgende Bedeutung haben :

$R^1$ Alkylrest mit bis zu 3 C-Atomen

$R^2$ Alkoxy-, Alkylthio- oder Alkylaminorest mit jeweils geradkettigem oder verzweigtem Alkylsubstituenten einer C-Atomzahl von bis zu 5

$Y^1$, $Y^2$ jeweils unabhängig voneinander Wasserstoff, ein $C_1$- bis $C_4$-Alkyl- oder $C_1$- bis $C_4$-Alkoxyrest oder Halogen

X O oder S.

Die neuen Verbindungen werden in an sich bekannter Weise nach folgendem Reaktionsschema hergestellt :

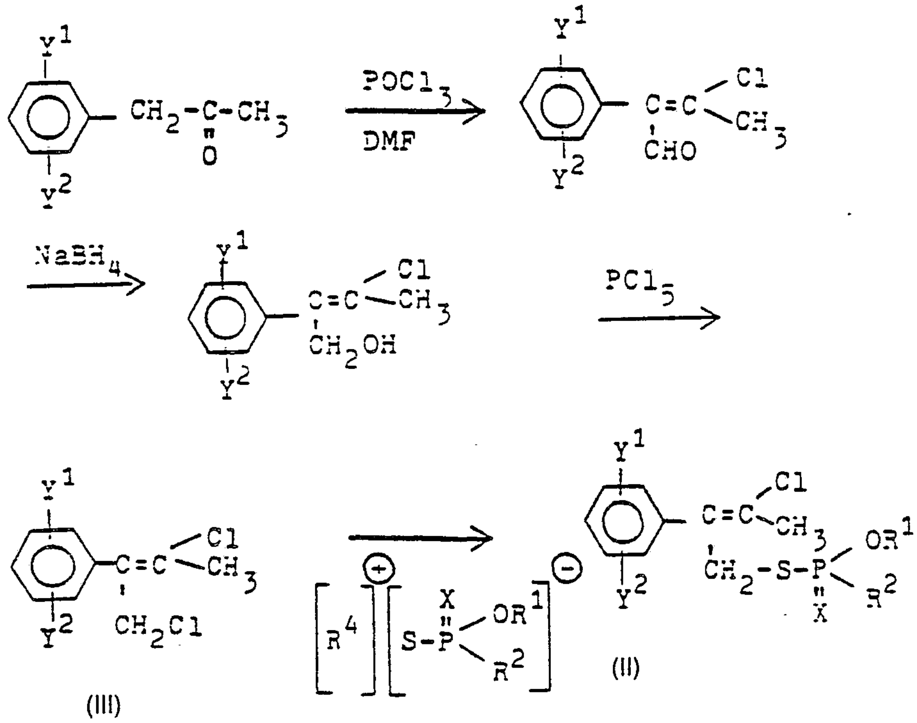


(III) (II) (I)

(J. Chem. Soc. C 1970, Seite 2 484,
Proc. Chem. Soc. 1958, 227
Chem. Comm. 24 (1959) 2385)

Die Salze der Formel II sind bekannte Verbindungen, die mit bekannten Methoden erhalten werden können (z. B. Houben-Weyl, Methoden der organischen Chemie, Bd. 12/2, Seite 690, Georg Thieme Verlag, Stuttgart 1964).

Als Kationen $R^4$ dieser Salze kommen außer dem Ammoniumion substituierte Ammoniumionen in Betracht, z. B. Dimethylammonium, Diethylammonium oder ein Alkalimetallion, z. B. des Natriums oder Kaliums.

Die Umsetzungen finden vorzugsweise in einem Lösungs- oder Verdünnungsmittel statt, z. B. einem aliphatischen oder aromatischen, gegebenenfalls chlorierten oder nitrierten Kohlenwasserstoff wie z. B. Benzol, Toluol, Xylol, Chlorbenzol, $CHCl_3$, $CH_2Cl_2$, $CCl_4$, einem cyclischen oder acyclischen Ether wie Diethylether, THF, einem Keton wie Aceton, Cyclohexanon, einem Nitril wie Acetonitril. Auch Gemische können verwendet werden. Auch zweiphasige Arbeitsweise ist möglich ; dabei werden Wasser und ein mit Wasser nicht mischbares Lösungsmittel wie Xylol, Toluol, Methyl-t-butyl-ether u. a. eingesetzt. Vorteilhaft kann der Zusatz eines Phasentransferkatalysators, z. B. eines Kronenethers oder quartären Ammoniumsalzes sein.

Die Reaktionen laufen i. a. bei einer Temperatur unterhalb von 100 °C ab, bevorzugt bei 40 bis 60 °C, soweit nicht der Kochpunkt des Solvens die obere Temperatur begrenzt.

Beispiel 1

In 100 ml abs. Acetonitril werden bei Raumtemperatur 11,6 g (0,05 Mol) 2-(p-Methoxyphenyl)-1,3-dichlorbuten-2 vorgelegt, dazugetropft werden 14,35 g (0,052 5 Mol) O-Ethyl-S-n-pentyl-dithiophosphorsaures Dimethylammoniumsalz, gelöst in Acetonitril, 8 h 50 °C, 12 h Raumtemperatur. Nach dem Einengen wird mit Ether aufgenommen, dreimal mit Wasser extrahiert, getrocknet, filtriert und eingeengt.

Ausbeute : 16,1 g = 76 %

Die ölige Substanz wird an Kieselgel mit n-Hexan/Aceton als Laufmittel gereinigt.

$n_D^{25}$ = 1,560 5

| Analyse | C | H | S | Cl | P | O |
|---|---|---|---|---|---|---|
| Theorie | 51,11 | 6,67 | 15,16 | 8,38 | 7,32 | 11,35 |
| Praxis | 51,9 | 6,7 | 14,8 | 8,6 | 6,9 | |

Weitere Verbindungen im Sinne der Erfindung sind

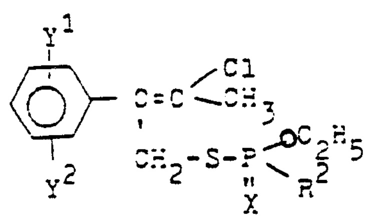

| | $Y^1$ | $Y^2$ | $R^2$ | $n_D^{25}$ |
|---|---|---|---|---|
| 2 | H | H | $S-CH_2-CH$ | 1,5616 |
| 3 | H | H | $S-CH_2CH_2-CH_3$ | 1,5700 |
| 4 | 3-Methoxy | 4-Methoxy | $-S-CH$ | 1,5666 |
| 5 | 3-Methoxy | 4-Methoxy | $S-C_3H_7$ | 1,5740 |
| 6 | H | 4-Methoxy | $S-CH$ | 1,5674 |
| 7 | H | H | $S-C_4H_9$ | 1,5628 |
| 8 | H | 4-Methoxy | $S-C_4H_9$ | 1,5681 |
| 9 | H | 4-Methoxy | $S-CH$ | 1,5680 |
| 10 | H | 4-Methoxy | $S-CH_2CH_2CH$ | 1,5597 |
| 11 | 3-Methoxy | 4-Methoxy | $S-CH$ | 1,5696 |
| 12 | 3-Methoxy | 4-Methoxy | $S-C_5H_{11}$ | 1,5629 |
| 13 | 3-Methoxy | 4-Methoxy | $S-H_2C-CH_2CH$ | 1,5608 |
| 14 | 3-Methoxy | 4-Methoxy | $S-CH_2-CH$ | 1,5668 |
| 15 | H | 4-Methoxy | $S-CH_2-CH$ | 1,5645 |
| 16 | H | 4-Methoxy | $S-C_3H_7$ | 1,5702 |
| 17 | H | H | $S-CH_2CH_2CH$ | 1,5564 |

Anwendungsbeispiele

1. Kontaktwirkung auf Zecken (Ornithodorus moubata)
Als Vergleichsmittel wurde das bekannte Handelsprodukt Phenthoate gewählt

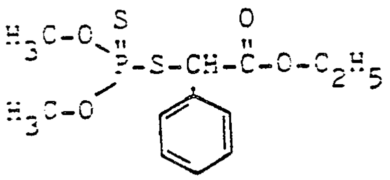
(Phenthoate)

Die Prüfung erfolgt an jungen Zecken, die erst einmal Blut aufgenommen haben. Je 5 Tiere werden in einen TEEFIX-Beutel 5 Sekunden in die wäßrige Wirkstoffaufbereitung getaucht. Der Beutel wird frei aufgehängt. Nach 48 Stunden ermittelt man die Mortalitätsrate. Die Versuchstemperatur beträgt 25 bis 26 °C.

Ergebnis:

| | | |
|---|---|---|
| Beispiel 2 | 0,004 % | 100 % Mort. |
| Beispiel 5 | 0,04 % | 100 % " |
| Beispiel 6 | 0,04 % | 100 % " |
| Beispiel 14 | 0,04 % | 100 % " |
| Vergleichsmittel | 0,1 % | 50 % " |

2. Dauerwirkung auf Spinnmilben (Tetranychus telarius) (Test A)
Getopfte Buschbohnen, die das erste Folgeblattpaar entwickelt haben und einen starken Besatz aller Stadien der Spinnmilbe Tetranychus telarius tragen, werden in der Spritzkabine mit der wäßrigen Wirkstoffaufbereitung tropfnaß gespritzt. Die Pflanzen werden dazu auf einen Drehteller gestellt und von allen Seiten mit einer Wirkstoffemulsion besprüht. Der Sprühvorgang dauert ca. 22 Sekunden. Auswertung durch Untersuchung auf Befall jeweils im Wochenabstand. Als Vergleichsmittel diente das bekannte Akarizid Cyhexatin (Tricyclohexylhydroxystannan).

Ergebnis :

Mittel gemäß Beispiel 2 : Bei einer Konzentration von 0,05 % nach 3 Wochen noch befallsfrei.

Vergleichsmittel : Bei einer Konzentration von 0,1 % Wirkungsdauer eine Woche ; danach wieder Befall.

Bei geringeren Konzentrationen ergibt sich 8 Tage nach Behandlung folgender Befund :

| | | |
|---|---|---|
| Beispiel 2 | 0,001 % | ca. 90 % Mort. |
| Beispiel 3 | 0,004 % | 100 % Mort. |
| Beispiel 4 | 0,02 % | ca. 90 % Mort. |
| Beispiel 5 | 0,025 % | 100 % Mort. |
| Beispiel 6 | 0,02 % | ca. 90 % Mort. |
| Beispiel 7 | 0,02 % | ca. 90 % Mort. |
| Beispiel 16 | 0,02 % | ca. 90 % Mort. |

3. Wirkung auf Spinnmilben (Tetranychus telarius), Test B Residualwirkung
Getopfte Buschbohnen, die das erste Folgeblattpaar entwickelt haben, werden in der Spritzkabine mit der wäßrigen Wirkstoffaufbereitung tropfnaß gespritzt. Die Pflanzen kommen dazu auf einen Drehteller und werden von allen Seiten mit insgesamt 50 ml Spritzbrühe besprüht. Der Sprühvorgang dauert ca. 20 Sekunden.

Nach 24 Stunden belegt man die Pflanzen mit infizierten Blattstücken, auf denen mindestens 100 Spinnmilben aller Stadien sind.

Nach 8 Tagen beurteilt man den Befall der Pflanzen.

| | | |
|---|---|---|
| Beispiel 2 | 0,01 % | 100 % Mort. |
| Beispiel 3 | 0,01 % | 100 % Mort. |
| Beispiel 4 | 0,02 % | ca. 80 % Mort. |
| Beispiel 5 | 0,025 % | 100 % Mort. |

4. Plutella maculipennis, Kohlschaben-Raupen ; Fraß- und Kontaktwirkung

Blätter von jungen Kohlpflanzen werden 3 Sekunden in die wäßrige Wirkstoffemulsion getaucht und nach kurzem Abtropfen auf einen angefeuchteten Filter in eine Petrischale gelegt. Das Blatt wird darauf mit 10 Raupen des 4. Stadiums belegt.

Nach 48 Stunden beurteilt man die Wirkung.

| | | |
|---|---|---|
| Beispiel 2 | 0,02 % | ca. 80 % Mort. |
| Beispiel 3 | 0,05 % | 100 % Mort. |
| Beispiel 4 | 0,02 % | ca. 80 % Mort. |
| Beispiel 14 | 0,025 % | ca. 80 % Mort. |

5. Zuchtversuch mit Stubenfliegen-Larven (Musca domestica)

Je 4,5 ml Magermilch füllt man in 50 ml Pennicillingläser und versetzt sie darauf mit 0,5 ml der wäßrigen Wirkstoffaufbereitung. Nach kurzem Mischen fügt man ein Wattebällchen (Firma Hartmann, Maintal) dazu und belegt dieses mit ca. 50 Ei-Larven der Stubenfliege.

Die Gläser lagert man abgedeckt bei Raumtemperatur und beurteilt die Entwicklung nach 7 Tagen.

| | | |
|---|---|---|
| Beispiel 2 | 5 ppm | 100 % Mort. |
| Beispiel 4 | 10 ppm | 100 % Mort. |
| Beispiel 5 | 5 ppm | ca. 80 % Mort. |
| Beispiel 6 | 5 ppm | ca. 80 % Mort. |
| Beispiel 15 | 5 ppm | 100 % Mort. |
| Beispiel 16 | 10 ppm | 100 % Mort. |

6. Kontaktwirkung auf Moskito-Larven (Aedes aegypti)

200 ml Leitungswasser werden mit der Wirkstoffaufbereitung versetzt und darauf mit 30 bis 40 Moskito-Larven im 4. Larvenstadium besetzt.

Die Versuchstemperatur beträgt 20 °C. Nach 24 Stunden wird die Wirkung ermittelt.

| | | |
|---|---|---|
| Beispiel 2 | 0,2 ppm | 100 % Mort. |
| Beispiel 3 | 0,1 ppm | ca. 80 % Mort. |
| Beispiel 4 | 0,1 ppm | ca. 80 % Mort. |
| Beispiel 6 | 0,1 ppm | 100 % Mort. |
| Beispiel 7 | 0,2 ppm | 100 % Mort. |
| Beispiel 16 | 0,1 ppm | 100 % Mort. |

**Patentansprüche** (für die Vertragsstaaten : BE, CH, DE, FR, GB, IT, LI, NL)

1. Phosphorsäureester der allgemeinen Formel (I)

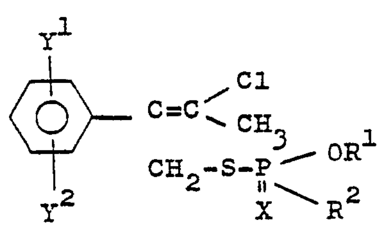

(I)

wobei $R^1$, $R^2$, $Y^1$ und $Y^2$ folgende Bedeutung haben :

$R^1$ Alkylrest mit bis zu 3 C-Atomen

$R^2$ Alkoxy-, Alkylthio- oder Alkylaminorest mit jeweils geradkettigem oder verzweigtem Alkylsubstituenten einer C-Atomzahl von bis zu 5

$Y^1$, $Y^2$ jeweils unabhängig voneinander Wasserstoff, ein $C_1$- bis $C_4$-Alkyl- oder $C_1$- bis $C_4$-Alkoxyrest oder Halogen

X O oder S.

2. Verfahren zur Herstellung von Phosphorsäureestern der allgemeinen Formel (I)

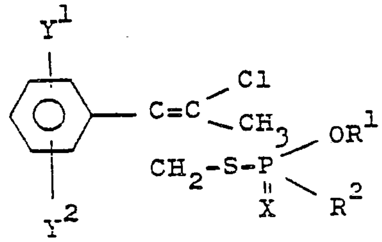

(I)

wobei $R^1$, $R^2$, $Y^1$ und $Y^2$ folgende Bedeutung haben :

$R^1$ Alkylrest mit bis zu 3 C-Atomen

$R^2$ Alkoxy-, Alkylthio- oder Alkylaminorest mit jeweils geradkettigem oder verzweigtem Alkylsubstituenten einer C-Atomzahl von bis zu 5

$Y^1$, $Y^2$ jeweils unabhängig voneinander Wasserstoff, ein $C_1$- bis $C_4$-Alkyl- oder $C_1$- bis $C_4$-Alkoxyrest oder Halogen

X O oder S

dadurch gekennzeichnet, daß man eine entsprechende Verbindung der allgemein Formel III

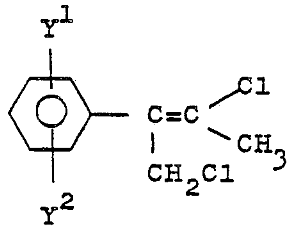

(III)

in der $Y^1$ und $Y^2$ die oben genannten Bedeutungen haben, mit einem entsprechenden Esterphosphat der allgemeinen Formel II

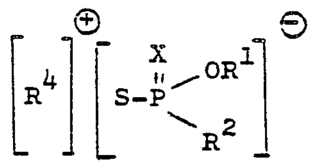

(II)

umsetzt, wobei $R^4$ Ammoniumion, substituiertes Ammoniumion oder Alkalimetallion bedeutet und X, $R^1$ und $R^2$ die oben genannten Bedeutungen haben.

3. Verwendung der Phosphorsäureester der allgemeinen Formel (I) gemäß Anspruch 1 als insektizide und Akarizide.

**Patentansprüche** (für den Vertragsstaat AT)

1. Verfahren zur Herstellung von Phosphorsäureestern der allgemeinen Formel (I)

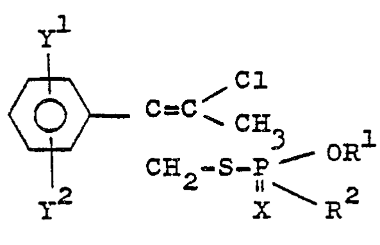

(I)

wobei $R^1$, $R^2$, $Y^1$ und $Y^2$ folgende Bedeutung haben :

$R^1$ Alkylrest mit bis zu 3 C-Atomen

$R^2$ Alkoxy-, Alkylthio- oder Alkylaminorest mit jeweils geradkettigem oder verzweigtem Alkylsubstituenten einer C-Atomzahl von bis zu 5

$Y^1$, $Y^2$ jeweils unabhängig voneinander Wasserstoff, ein $C_1$- bis $C_4$-Alkyl- oder $C_1$- bis $C_4$-Alkoxyrest oder Halogen

X O oder S

dadurch gekennzeichnet, daß man eine entsprechende Verbindung der allgemein Formel III

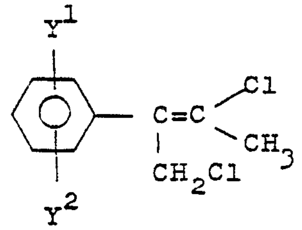

(III)

in der $Y^1$ und $Y^2$ die oben genannten Bedeutungen haben, mit einem entsprechenden Esterphosphat der allgemeinen Formel II

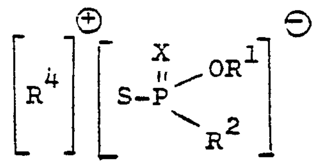

(II)

umsetzt, wobei $R^4$ Ammoniumion, substituiertes Ammoniumion oder Alkalimetallion bedeutet und X, $R^1$ und $R^2$ die oben genannten Bedeutungen haben.

2. Verwendung der Phosphorsäureester der allgemeinen Formel (I) gemäß Anspruch 1 als Insektizide und Akarizide.

**Claims** (for the Contracting States : BE, CH, DE, FR, GB, IT, LI, NL)

1. A phosphate of the general formula (I)

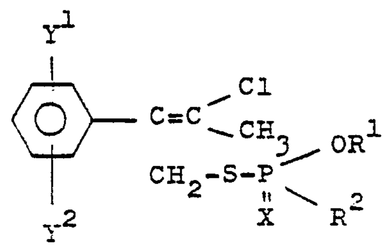

(I)

where

$R^1$, $R^2$, $Y^1$ and $Y^2$ have the following meanings :

$R^1$ is alkyl of up to 3 carbon atoms,

$R^2$ is alkoxy, alkylthio or alkylamino, each of which has a straight-chain or branched alkyl substituent of up to 5 carbon atoms,

$Y^1$ and $Y^2$ independently of one another are hydrogen, $C_1$-$C_4$-alkyl, $C_1$-$C_4$-alkoxy or halogen, and

X is O or S.

2. A process for the manufacture of phosphates of the general formula (I)

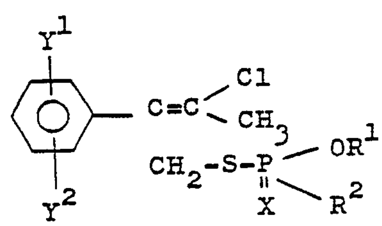

(I)

where

$R^1$, $R^2$, $Y^1$ and $Y^2$ have the following meanings :

$R^1$ is alkyl of up to 3 carbon atoms,

$R^2$ is alkoxy, alkylthio or alkylamino, each of which has a straight-chain or branched alkyl substituent of up to 5 carbon atoms,

$Y^1$ and $Y^2$ independently of one another are hydrogen, $C_1$-$C_4$-alkyl, $C_1$-$C_4$-alkoxy or halogen, and X is O or S,

wherein an appropriate compound of the general formula III

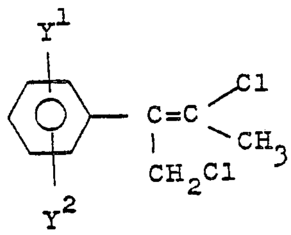

(III)

where $Y^1$ and $Y^2$ have the above-mentioned meanings, is reacted with a corresponding ester phosphate of the general formula II

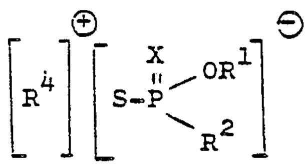

(II)

where $R^4$ is an ammonium ion, a substituted ammonium ion or an alkali metal ion, and X, $R^1$ and $R^2$ have the above-mentioned meanings.

3. The use of a phosphate of the general formula (I) as claimed in claim 1 as an insecticide or acaricide.

**Claims** (for the Contracting State AT)

1. A process for the manufacture of phosphates of the general formula (I)

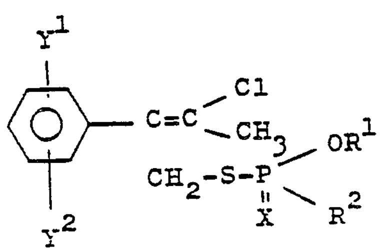

(I)

where

$R^1$, $R^2$, $Y^1$ and $Y^2$ have the following meanings :

$R^1$ is alkyl of up to 3 carbon atoms,

$R^2$ is alkoxy, alkylthio of alkylamino, each of which has a straight-chain or branched alkyl substituent of up to 5 carbon atoms,

$Y^1$ and $Y^2$ independently of one another are hydrogen, $C_1$-$C_4$-alkyl, $C_1$-$C_4$-alkoxy or halogen, and X is O or S,

wherein an appropriate compound of the general formula III

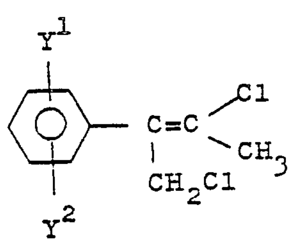

(III)

where $Y^1$ and $Y^2$ have the above-mentioned meanings, is reacted with a corresponding ester phosphate of the general formula II

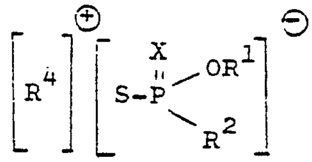

(II)

where $R^4$ is an ammonium ion, a substituted ammonium ion or an alkali metal ion, and X, $R^1$ and $R^2$ have the above-mentioned meanings.

2. The use of a phosphate of the general formula (I) as defined in claim 1 as an insecticide or acaricide.

**Revendications** (pour les Etats contractants : BE, CH, DE, FR, GB, IT, LI, NL)

1. Esters d'acide phosphorique de formule générale (I)

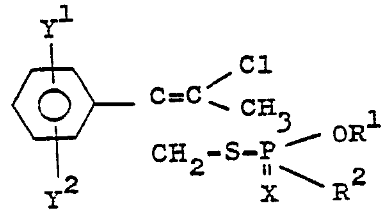

(I)

$R^1$, $R^2$, $Y^1$ et $Y^2$ ayant les significations suivantes :

$R^1$, reste alkyle ayant jusqu'à 3 atomes C

$R^2$, reste alcoxy, alkylthio ou alkylamino ayant chacun des substituants alkyle à chaîne droite ou ramifiée d'un nombre d'atomes C allant jusqu'à 5

$Y^1$, $Y^2$ chacun, indépendant l'un de l'autre, hydrogène, un reste alkyle en $C_1$ à $C_4$ ou alcoxy en $C_1$ à $C_4$ ou halogène

X, O ou S.

2. Procédé de préparation d'esters d'acide phosphorique de formule générale I

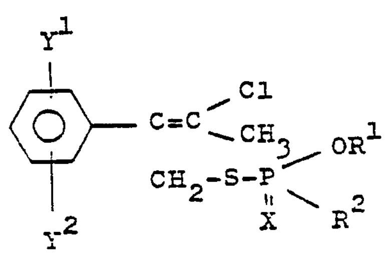

(I)

$R^1$, $R^2$, $Y^1$ et $Y^2$ ayant les significations suivantes :

$R^1$, reste alkyle ayant jusqu'à 3 atomes C

$R^2$, reste alcoxy, alkylthio ou alkylamino ayant chacun des substituants alkyle à chaîne droite ou ramifiée d'un nombre d'atomes C allant jusqu'à 5

$Y^1$, $Y^2$ chacun, indépendant l'un de l'autre, hydrogène, un reste alkyle en $C_1$ à $C_4$ ou alcoxy en $C_1$ à $C_4$ ou halogène

X, O ou S,

caractérisé par le fait que l'on fait réagir un composé de formule générale III

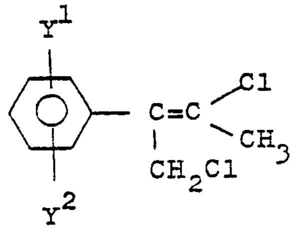

(III)

dans laquelle $Y^1$ et $Y^2$ ont les significations sus-indiquées avec un phosphate d'éther correspondant de formule générale II

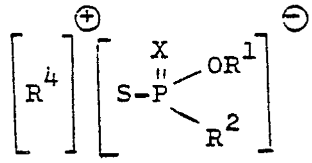

(II)

$R^4$ représentant un ion ammonium, un ion ammonium substitué ou un ion métal alcalin et X, $R^1$ et $R^2$ ayant les significations sus-indiquées.

3. Utilisation des esters d'acide phosphorique de formule générale (I) comme insecticides ou acaricides.

**Revendications** (pour l'Etat contractant AT)

1. Procédé de préparation d'esters d'acide phosphorique de formule générale (I)

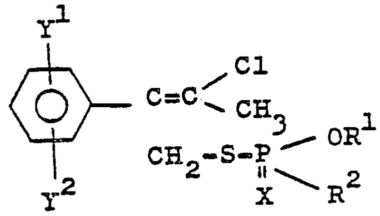

(I)

$R^1$, $R^2$, $Y^1$ et $Y^2$ ayant les significations suivantes :

$R^1$, reste alkyle ayant jusqu'à 3 atomes C

$R^2$, reste alcoxy, alkylthio ou alkylamino ayant chacun des substituants alkyle à chaîne droite ou ramifiée d'un nombre d'atomes C allant jusqu'à 5

$Y^1$, $Y^2$ chacun, indépendant l'un de l'autre, hydrogène, un reste alkyle en $C_1$ à $C_4$ ou alcoxy en $C_1$ à $C_4$ ou halogène

X, O ou S,

caractérisé par le fait que l'on fait réagir un composé de formule générale III

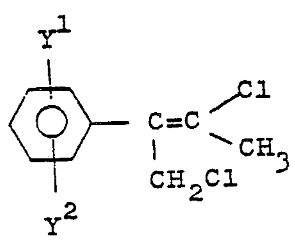

(III)

dans laquelle $Y^1$ et $Y^2$ ont les significations sus-indiquées avec un phosphate d'éther correspondant de formule générale II

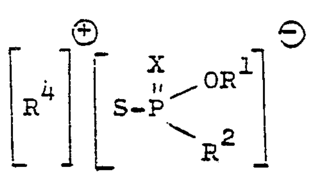

(II)

$R^4$ représentant un ion ammonium, un ion ammonium substitué ou un ion métal alcalin et X, $R^1$ et $R^2$ ayant les significations sus-indiquées.

2. Utilisation des esters d'acide phosphorique de formule générale (I) selon la revendication 1 comme insecticides ou acaricides.